# EUROPÄISCHE PATENTSCHRIFT

(11) **EP 3 895 162 B1**
(45) Veröffentlichungstag und Bekanntmachung des Hinweises auf die Patenterteilung: **20.08.2025**
(21) Anmeldenummer: 19800945.8
(22) Anmeldetag: 29.10.2019
(51) Int. Cl.: G10L 15/22, G10L 17/00

(54) **VERFAHREN ZUM BETREIBEN EINES INTERAKTIVEN INFORMATIONSSYSTEMS FÜR EIN FAHRZEUG, SOWIE EIN FAHRZEUG**
METHOD FOR OPERATING AN INTERACTIVE INFORMATION SYSTEM FOR A VEHICLE, AND VEHICLE
PROCÉDÉ POUR EXPLOITER UN SYSTÈME D'INFORMATION INTERACTIF POUR UN VÉHICULE, ET VÉHICULE

(30) Priorität: 13.12.2018 DE 102018221712
(43) Veröffentlichungstag der Anmeldung: 20.10.2021
(73) Patentinhaber: VOLKSWAGEN AKTIENGESELLSCHAFT, 38440 Wolfsburg (DE)
(72) Erfinder: ROSE, Jewgeni, 38118 Braunschweig (DE); JORDAN, Simon, 38118 Braunschweig (DE)
(86) Internationale Anmeldenummer: PCT/EP2019/079515
(87) Internationale Veröffentlichungsnummer: WO 2020/119995

(56) Entgegenhaltungen:
- US-A1- 2014 136 187
- US-A1- 2016 098 992

## Beschreibung

Die Erfindung betrifft ein Verfahren zum Betreiben eines interaktiven Informationssystems für ein Fahrzeug und ein Fahrzeug.

Das vernetzte Fahrzeug, welches mit seiner unmittelbaren Umgebung kommuniziert und für diese Zwecke beispielsweise unter anderem das Internet verwendet, kann bereits als gängiger Stand der Technik angesehen werden. In diesem Zuge sind entsprechende Dialogsysteme im Fahrzeug selbst bekannt, welche zudem eine Interaktion des Fahrers oder der Beifahrer mit dem Fahrzeug oder über das Fahrzeug mit der unmittelbaren Umgebung ermöglichen.

Sprachdialogsysteme im Fahrzeug werden für Automobilhersteller immer wichtiger, weil diese in Zeiten der Automatisierung von Fahrfunktionen ein zusätzliches Fahrerlebnis schaffen, das darin besteht, sich mit dem Fahrzeug unterhalten zu können. Hierzu gehört beispielsweise, sich über das Tagesgeschehen zu informieren oder allgemein Fragen über die Fahrsituation zu stellen. Zum Beispiel könnten sich Insassen während einer Fahrt fragen, welches Gebäude in Sichtweite des Fahrzeugs gerade zu sehen ist. Solch eine Frage könnte dann direkt via Spracheingabe an das Fahrzeug selbst gerichtet werden. Das Fahrzeug beziehungsweise ein entsprechendes zugehöriges System könnte dann diese Frage und andere ähnliche Fragen situationsgerecht beantworten.

In diesem Zusammenhang sind erste Veröffentlichungen aus der Wissenschaft bekannt, welche sich mit dem Thema "Question-Answering" (Question-Answering = Fragen - Beantworten) und allgemein mit Sprachverarbeitung beschäftigen. Ein erweiterter Ansatz wird dabei von der Kontextanalyse betrachtet. In der Kontextanalyse besteht die Grundidee darin, gesprochene Dialoge zwischen System und Nutzer in einem datengetriebenen Ansatz dafür zu nutzen, um zu erkennen, wann der Benutzer mit einer Frage an eine zuvor gestellte Frage anknüpft oder die Frage ein neues Thema einleitet. Beispielsweise kann das System erkennen, nachdem bereits eine Antwort auf eine erste Frage durch das System gegeben wurde, dass sich eine mögliche anschließende Frage auf einen Kontext der ersten Frage bezieht und dementsprechend eine zweite Antwort und deren Inhalt sinngemäß darauf ausrichten. Mit anderen Worten bezieht sich die letzte Frage somit auf die zuvor gestellte Frage, ohne dass dabei ein Benutzer von sich aus eine unmittelbare Verknüpfung im Sinne des Inhalts beziehungsweise Sachverhalts erstellen muss.

Aus dem Stand der Technik sind bereits erste Lösungsansätze als bekannt zu entnehmen.

Aus der Druckschrift DE 10 2015 210 430 A1 ist ein Verfahren zum Erkennen eines Sprachkontexts für eine Sprachsteuerung und ein Verfahren zum Ermitteln eines Sprachsteuersignals für eine Sprachsteuerung und eine Vorrichtung zum Ausführen der Verfahren als bekannt zu entnehmen. Das Verfahren umfasst einen Schritt des Einlesens einer Blickrichtungsinformation über eine aktuelle Blickrichtung eines Insassen des Fahrzeugs, einen Schritt des Zuordnens der Blickrichtungsinformation zu einer Betrachtungszone in einem Innenraum des Fahrzeugs, um eine Betrachtungszoneninformation über eine von dem Insassen aktuell betrachtete Betrachtungszone zu erhalten, und einen Schritt des Bestimmens einer Sprachkontextinformation über einen der aktuell betrachteten Betrachtungszone zugeordneten vorbestimmten Sprachkontext unter Verwendung der Betrachtungszoneninformation.

Aus der Druckschrift DE 10 2015 100 900 A1 ist ein Einstellen einer Spracherkennung unter Verwendung einer Kontextinformation als bekannt zu entnehmen. Eine Ausführungsform stellt dabei ein Verfahren bereit, welches folgende Schritte umfasst: Erhalten von Kontextinformationen, die sich auf eine Informationsverarbeitungsvorrichtung beziehen, unter Verwendung eines Prozessors. Anschließend wird ein Anpassen einer automatisierten Spracherkennungsmaschine unter Verwendung der Kontextinformationen unter Verwendung eines Prozessors vollzogen. Es folgt ein Empfangen einer Benutzerspracheingabe an einem Audioempfänger der Informationsverarbeitungsvorrichtung und letztlich folgt der Schritt eines Bereitstellens, unter Verwendung eines Prozessors, einer erkannten Sprache basierend auf der empfangenen Benutzerspracheingabe und der Anpassung der Kontextinformationen an die automatisierte Spracherkennungsmaschine.

Aus der Druckschrift DE 10 2014 118 450 A1 ist ein audiobasiertes System und ein Verfahren zur Klassifikation von fahrzeuginternem Kontext als bekannt zu entnehmen. Jeder Kontext entspricht dabei einem oder mehreren Ereignissen, die mit dem Fahrzeug verbunden sind, zum Beispiel, dass das Funkgerät eingeschaltet ist und/oder ein Fenster geöffnet ist. Das Verfahren umfasst das Erfassen von Schallaktivitäten in einem im Fahrzeug erfassten Audiosignal und das Zuweisen eines Kontextes zu dem Fahrzeug basierend auf den erfassten Schallaktivitäten.

Nichtaudiodaten wie der Betriebsstatus eines Fahrzeugsystems oder -geräts werden verwendet, um Kontexte zuzuordnen.

Aus der Druckschrift DE 10 2008 062 542 A1 ist zudem eine fahrzeuginterne, die Umstände berücksichtigende Spracherkennung als bekannt zu entnehmen. Eine Vielzahl von Parametern, die einer Vielzahl von Fahrzeugfunktionen zugeordnet sind, werden als Anzeige der aktuellen Fahrzeugbedingungen überwacht. Mindestens eine Fahrzeugfunktion wird basierend auf einer Benutzerinteraktion mit dem Fahrzeug als Kandidat für eine vom Benutzer beabsichtigte Steuerung identifiziert. Die identifizierte Fahrzeugfunktion wird dann verwendet, um zwischen potenziellen Befehlen zu unterscheiden, die in von dem Benutzer empfangenen Sprache enthalten sind.

Aus der Druckschrift EP 2 211 336 A1 ist ein Verfahren zum Erkennen der Spracheingabe eines Benutzers zu entnehmen, wobei folgende Schritte vorgesehen werden: Erkennen der Spracheingabe des Benutzers, Erkennen der Spracheingabe des Benutzers durch Vergleichen der Spracheingabe mit einer Liste von Einträgen unter Verwendung von Sprachmodellstatistiken, um die Sprache zu bestimmen, welche am besten mit der Spracheingabe des Benutzers übereinstimmt, Erfassen von Navigationsinformationen einer Reise zu einem vorbestimmten Ziel, wobei der wahrscheinlichste Eintrag durch Modifizieren der Sprachmodellstatistik unter Berücksichtigung der Navigationsinformationen bestimmt wird.

Aus der Druckschrift US 2014 / 136 187 A1 ist zudem ein persönlicher Fahrzeugassistent als bekannt zu entnehmen. Insbesondere wird ein persönlicher Fahrzeugassistent offenbart, der einen Benutzer in einen Gesprächsdialog über fahrzeugbezogene Themen einbezieht, wie sie üblicherweise in der Bedienungsanleitung eines Fahrzeugs zu finden sind. Solch ein persönlicher Fahrzeugassistent umfasst dabei Module zum Interpretieren gesprochener natürlicher Spracheingaben, zum Durchsuchen einer Fahrzeug-Wissensdatenbank und/oder anderen Datenquellen für relevante Informationen und Reagieren auf die Eingabe des Benutzers in einer Konversationsform. Der Dialog kann durch den Benutzer oder proaktiver durch den persönlichen Fahrzeugassistenten basierend auf Ereignissen initiiert werden, die aktuell in Bezug auf das Fahrzeug stattfinden können. Der persönliche Fahrzeugassistent kann vom Fahrzeug erhaltene Echtzeiteingaben und/oder nonverbale Eingaben vom Benutzer verwenden, um sein Verständnis des Dialogs zu verbessern und den Benutzer auf vielfältige Weise zu unterstützen.

Aus der Druckschrift US 2016 / 098 992 A1 ist zudem eine Sprach- und Verbindungsplattform als bekannt zu entnehmen. Insbesondere wird ein System und ein Verfahren zum Bereitstellen eines Sprachassistenten offenbart. Das Verfahren umfasst dabei die folgenden Schritte: Empfangen einer ersten Audioeingabe von einem Benutzer, der eine erste Aktion anfordert, an einem ersten Gerät; Durchführen einer automatischen Spracherkennung an der ersten Audioeingabe; Erhalten eines Benutzerkontexts; Durchführen eines Verstehens natürlicher Sprache basierend auf der Spracherkennung der ersten Audioeingabe; und Durchführen der ersten Aktion basierend auf dem Kontext des Benutzers und dem Verständnis natürlicher Sprache.

Heutige Systeme fokussieren sich oft auf einen besonderen Aspekt und nutzen dazu häufig bereits Spracheingabefunktionen. Eine vollständige Verknüpfung von möglichst allen zur Verfügung stehenden Informationsquellen wird dabei außen vor gelassen.

Der Erfindung liegt nun die Aufgabe zugrunde, ein Verfahren zum Betreiben eines interaktiven Informationssystems für ein Fahrzeug und ein Fahrzeug bereitzustellen, welches eine benutzerfreundliche Bedienung und einen hohen Informationsgehalt gewährleistet.

In bevorzugter Ausgestaltung der Erfindung ist vorgesehen, dass ein Verfahren zum Betreiben eines interaktiven Informationssystems für ein Fahrzeug bereitgestellt wird. Solch ein Verfahren umfasst dabei die folgenden Schritte: Betreiben eines Kontextinformationssystems, welches ausgelegt ist, eine erste Anfrage eines Benutzers über eine Eingabeeinheit entgegenzunehmen und zu bearbeiten, sodass zumindest eine erste Antwort generiert wird und über eine Ausgabeeinheit zur Verfügung gestellt wird. Eine zweite Anfrage, welche direkt nach der ersten Anfrage gestellt wird, wird vor einer Bearbeitung mittels des Kontextinformationssystems im Kontext der ersten Anfrage unter Verwendung einer Kontextanalyse aufbereitet, sodass zumindest eine zweite Antwort generiert wird und über eine Ausgabeeinheit zur Verfügung gestellt wird. In Abhängigkeit der Aufbereitung wird die Antwort entweder im Kontext der ersten Antwort oder unabhängig von der ersten Antwort gegeben. Die erste und/oder zweite Anfrage des Benutzers beziehen sich auf ein externes Objekt im Umkreis des Fahrzeugs. Zudem wird zumindest eine Speichereinheit betrieben, welche mit dem Kontextinformationssystem koppelbar ist und ausgelegt ist, Aktivitäten des Kontextinformationssystems zu speichern und dem Kontextinformationssystem zwecks Bearbeitung von Anfragen zur Verfügung zu stellen. Außerdem wird zumindest eine Komponente eines Fahrzeugsensoriksystems betrieben, welche mit dem Kontextinformationssystem koppelbar ist und welche ausgelegt ist, zumindest eine Information aus der näheren und/oder erweiterten Umgebung des Fahrzeugs und/oder von dem Fahrzeug selbst zu erfassen und aufzubereiten. Diese zumindest eine Information wird dem Kontextinformationssystem zur Verfügung gestellt, sodass eine jeweilige Antwort auf eine Anfrage des Benutzers zusätzlich im Kontext dieser Information bearbeitet wird und über eine Ausgabeeinheit zur Verfügung gestellt wird. Auf diese Weise kann nicht nur eine benutzerfreundliche Bedienung, sondern auch ein hoher Informationsgehalt gewährleistet werden. Das Kontextinformationssystem kann dabei in Anlehnung an bereits etablierte Systeme aufgebaut sein oder zumindest teilweise ein übliches System etwa von einer mobilen Anwendung oder von einem Bordcomputer sein. Zu den Aktivitäten des Kontextinformationssystems können jegliche Interaktionen während eines Dialogs gezählt werden, welche für eine aktuelle und/oder spätere Anfrage als nützlich angesehen wird. Das Verfahren ist an dieser Stelle nicht nennenswert begrenzt und es kann im Extremfall dazu führen, dass beispielsweise lieber zu viele Informationen über die verschiedenen Registrierungsebenen gespeichert und/oder verwertet werden als zu wenige. Auch könnte zu den Aktivitäten etwa eine zeitdimensionale Einordnung von Anfragen eines oder mehrerer Benutzer gezählt werden, wobei einen aktuelle Datumseingabe ebenso berücksichtigt wird wie die Tatsache, dass sich das Fahrzeug beispielsweise in verschiedenen Zeitzonen während der Fahrt bewegt oder sich eine Anfrage auf verschiedene Zeitzonen bezieht. Bekannte Systeme haben dabei häufig Bezeichnungen, welche entweder selbst einen Personeneigennamen darstellen oder in Anlehnung an einen solchen Eigennamen gebildet sind. Auch sind solche Systeme unter der Bezeichnung "Relevancy Recognition for Contextual Question Answering" (= Relevanzerkennung für die kontextbezogene Beantwortung von Fragen) bekannt, wobei die Kontextanalyse selbst im Fokus steht. Die Grundidee besteht darin, die gesprochenen Dialoge zwischen System und Nutzer in einem datengetriebenen Ansatz dafür zu nutzen, um zu erkennen, wann der Benutzer mit einer Frage an eine zuvor gestellte Frage anknüpft und wann die Frage ein neues Thema einleitet. Mit anderen Worten kann eine zuletzt gestellte Frage sich auf eine zuvor gestellte Frage beziehen. Das System muss dies erkennen und eine Antwort liefern, ohne dass der Benutzer zusätzliche Erläuterungen bereitstellen muss. Diese Systeme weisen dabei bereits eine in sich geschlossene Logik auf, welche für einen Dialog mit einem Benutzer geeignet ist. Das vorgestellte Verfahren geht dabei noch einen Schritt weiter, indem diese Logik entsprechend mit weiteren Informationen gekoppelt und dann verschnitten wird, sodass ein noch höherer Informationsgehalt hervorgebracht wird. So entsteht ein besonderes Kontextmodell mit dem Benutzer, welches eine Vielzahl von Informationen sammelt, bewertet, einordnet und gemäß einer komplexeren Antwort ausgeben kann. Alle Informationen eines Fahrzeugsensoriksystems, etwa Informationen über eine aktuelle Fahrt des Fahrzeugs, können dabei über die einzelnen Komponenten dieses Systems erfasst werden und entweder direkt verwertet oder zunächst gespeichert werden, um letztlich in einem jeweiligen Dialog mit dem Benutzer verwendet oder angewendet zu werden. Verknüpfungen können also nicht nur in dem Kontextinformationssystem gemäß einer dort vorhandenen Logik erstellt werden, sondern aufgrund einer erweiterten Informationslage zusätzlich bewertet, eingeordnet und somit mit einem komplexeren Inhalt als aufbereitete Antwort ausgegeben werden. Mit anderen Worten werden also alle gemäß dem vorgestellten Verfahren gesammelten Informationen nicht nur aufgelistet und gespeichert, sondern mittels des interaktiven Informationssystems noch weiter aggregiert und verknüpft, sodass somit Anfragen von einem oder mehreren Benutzern noch gehaltvoller beantwortet werden können. Beispielsweise werden alle Informationen technisch gesehen in einem sogenannten Wissensgraph gespeichert, sodass Anfragen eines Benutzers in eine für Wissensdatenbanken geeigneten Abfragesprache übersetzt und angewandt werden. Es können also mittels des vorgestellten Verfahrens relevante Informationen kontinuierlich erfasst werden und abrufbereit beispielsweise direkt im Fahrzeug vorgehalten werden. Das interaktive Informationssystem kann dabei über entsprechende Schnittstellen und Steuereinheiten verfügen oder es können im Fahrzeug bereits vorhandene Kapazitäten und Komponenten wie beispielsweise Teile eines Bordcomputers oder einer Fahrzeugsteuerung entsprechend verwendet werden. Das interaktive Informationssystem ist in diesem Sinne eine Art Plattform und Schnittstelle zugleich, welches es erlaubt, die verschiedenen zunächst für sich stehenden Systeme in geeigneter Weise zu einer übergeordneten neuen Logik zusammenzuführen. Eine Interaktion betrifft also in diesem Sinne nicht nur die eigentliche Kommunikation mit einem oder mehreren Benutzern, sondern deutet auch auf diese Interaktion der ansonsten für sich stehenden einzelnen Systeme hin, sodass eine gehaltvolle und benutzerfreundliche Reaktion in Form der gewünschten Antworten ermöglicht wird. Die Komponenten der Fahrzeugsensorik können dabei beispielsweise sämtliche Steuergeräte und Sensorvorrichtungen umfassen, sodass das interaktive Informationssystem letztlich eine Vielzahl von Kombinationsmöglichkeiten für das vorgestellte Verfahren nutzen kann. Beispielsweise können jegliche Abstandssensoren und in diesem Zusammenhang verwendete Steuerungen mit ihren jeweiligen Informationen genutzt werden, um mittels einer geeigneten Verschneidung im Sinne des Verfahrens einen höheren Informationsgehalt für den Benutzer bereitzustellen.

In weiterer bevorzugter Ausgestaltung der Erfindung ist vorgesehen, dass ein Fahrzeug bereitgestellt wird, welches ausgelegt ist, ein Verfahren gemäß Ansprüchen 1 bis 8 vor, nach oder während einer Fahrt zu betreiben. Die zuvor genannten Vorteile gelten soweit übertragbar auch für das vorgestellte Fahrzeug.

Weitere bevorzugte Ausgestaltungen der Erfindung ergeben sich aus den übrigen, in den Unteransprüchen genannten Merkmalen.

So ist in einer weiteren bevorzugten Ausgestaltung der Erfindung vorgesehen, dass die Eingabeeinheit eine sprachgesteuerte Eingabeeinheit ist, welche ausgelegt ist, eine Spracheingabe aufzunehmen und zu verarbeiten, und/oder wobei die Eingabeeinheit ausgelegt ist, digital aufbereitete Eingabeinformationen aufzunehmen und zu verarbeiten. Somit kann ein besonders benutzerfreundliches Verfahren gewährleistet werden, da beispielsweise ein Benutzer allein über die Sprache seine Anfragen stellen kann. Zusätzlich oder alternativ kann der Benutzer zudem digital aufbereitete Eingabeinformationen bereitstellen. Dies könnte beispielsweise über eine im Fahrzeug vorliegende Tastatur und/oder über einen berührungsempfindlichen Bildschirm vollzogen werden. Denkbar ist auch eine Eingabe per Kurznachricht oder generell eine Eingabe über eine Recheneinheit, welche in beliebiger Form an das interaktive Informationssystem und/oder an das Fahrzeug gekoppelt ist. An dieser Stelle sind keine nennenswerten Grenzen zu sehen, solange letztendlich eine bearbeitbare Eingabe beispielsweise in digitaler Form im Sinne einer zumindest teilweise standardisierten Recheneinheitssprache oder -dialekts vollzogen wird.

Auch ist in einer weiteren bevorzugten Ausgestaltung der Erfindung vorgesehen, dass die Ausgabeeinheit eine sprachgesteuerte Ausgabeeinheit ist, welche ausgelegt ist, eine Sprachausgabe auszugeben, und/oder wobei die Ausgabeeinheit ausgelegt ist, digital aufbereitete Ausgabeinformationen auszugeben. Auf diese Weise ist eine noch benutzerfreundliche Gestaltung des Verfahrens möglich. Ein Benutzer kann somit beispielsweise eine Antwort zur Kenntnis nehmen, während eine andere Tätigkeit ausgeführt wird. Auch könnte die Antwort unabhängig von dem Fahrzeug über ein mobiles Endgerät in Form eines Textes oder Bildes zeitversetzt entgegengenommen werden. An dieser Stelle sind keine nennenswerten Grenzen zu sehen, solange letztendlich eine bearbeitbare Eingabe beispielsweise in digitaler Form im Sinne einer zumindest teilweise standardisierten Recheneinheitssprache oder -dialekts vollzogen wird.

Ferner ist in einer weiteren bevorzugten Ausgestaltung der Erfindung vorgesehen, dass der Benutzer ein Fahrer und/oder Beifahrer von dem Fahrzeug ist, wobei eine Stimme des Benutzers von dem Kontextinformationssystem wiedererkannt wird und eine in der Speichereinheit gespeicherte persönliche Wissensbasis bei Antworten für diesen Benutzer berücksichtigt wird. Auf diese Weise kann eine Antwort noch besser auf einen gewünschten Kontext und Inhalt vorbereitet und dann ausgegeben werden. Beispielsweise kann somit eine Verknüpfung mit zuvor bereits angelegten Informationen eines spezifischen Benutzers erstellt werden, sodass eine gezielte Beantwortung, welche beispielsweise auf Präferenzen des Benutzers zugeschnitten sind, ermöglicht werden. Eine Fahrt in der Stadt könnte beispielsweise als Ziel ein geöffnetes Restaurant in mittelbarer Nähe sein. Eine mündliche Anfrage eines Benutzers führt über die Spracherkennung und Stimmenerkennung dazu, dass das System eine zuvor gespeicherte Informationen über ein Lieblingsrestaurant nutzt, um beispielsweise darauf hinzuweisen, dass dieses erst ab einer gewissen Uhrzeit öffnet oder heute leider geschlossen ist. Solch ein Dialog könnte dabei eine eigene Dynamik entwickeln, ohne dass sämtliche Detailfragen zuvor gestellt werden müssten. Eine benutzerfreundliche Anwendung wird somit mit dem Verfahren sehr gut ermöglicht.

Zudem ist vorgesehen, dass das Verfahren folgenden weiteren Schritt umfasst: Betreiben zumindest einer Komponente eines Benutzersensoriksystems, welche ausgelegt ist, zumindest eine Information über den Benutzer zu erfassen und aufzubereiten, sodass diese zumindest eine Information dem Kontextinformationssystem zur Verfügung gestellt wird, sodass eine jeweilige Antwort auf eine Anfrage des Benutzers zusätzlich im Kontext dieser Information bearbeitet wird und über eine Ausgabeeinheit zur Verfügung gestellt wird. Dies könnte zum Beispiel eine Komponente sein, welche eine Blickfelderkennung des Benutzers registriert und diese resultierende Information dann für eine gehaltvollere Beantwortung einer Anfrage nutzt. Hierzu wird die Kopfposition, Gestik und Mimik eines Fahrers erfasst. Wenn der Fahrer in eine bestimmte Richtung schaut und zusätzlich etwa nach einem Gebäude fragt, wird eine Antwort so aufbereitet, dass das System somit den Kontext der Frage mit dieser Blickrichtung nicht nur folgerichtig assoziiert, sondern dann eine gehaltvollere Antwort liefert. Somit kann einem Benutzer ein komfortables Betreiben solch eines Verfahrens ermöglicht werden, da eine minimale Eingabe trotzdem zu einer folgerichtigen und komplexen Antwort führt. Die erfassten Informationen werden zudem von dem Infosystem interpretiert, um einen Blick- oder Zeigewinkel, beispielsweise von einem Arm oder einer Hand, abhängig von der aktuellen GPS-Position zu deuten, welcher den Bereich eingrenzt, in welchem zum Beispiel auf der Karte nach relevanten Objekten gesucht werden soll. Auch werden im Umkreis des Fahrzeugs, in welchem das Verfahren angewandt wird, alle bewegten Objekte, wie andere Fahrzeuge und Fahrräder, erfasst und entsprechend in einen kontextbasierten Dialog verwendet. Eine Anfrage über ein rotes Fahrzeug könnte dann folgerichtig mit einem sich seitlich befindenden Sportwagen gedeutet werden, wobei zusätzlich etwa ein auf diesen Sportwagen ausgestreckter Zeigefinger dem System hilft, eine genauere und gehaltvollere Antwort zu geben. Darüber hinaus können zeitliche Validitäten einer Anfrage in Betracht gezogen werden. So kann es aufgrund von Systemlatenzen und der Bewegung des Fahrzeugs dazu kommen, dass die Anfrage erst dann vom System verstanden wird, wenn der Benutzer bereits am Objekt von Interesse vorbeigefahren ist. Solch ein Umstand kann vom System zusätzlich rausgerechnet werden, was beispielsweise nicht nur auf Basis der Komponente eines Benutzersensoriksystems erfolgt, sondern insbesondere aufgrund der Interaktion mit Komponenten der Fahrzeugsensorik im Zusammenhang mit Komponenten (oder nur einer) des Benutzersensoriksystems.

Auch ist in einer weiteren bevorzugten Ausgestaltung der Erfindung vorgesehen, dass Aktivitäten des Kontextinformationssystems pro Fahrt des Fahrzeugs als eine in sich geschlossene Wissensbasis gespeichert werden, sodass zu gebende Antworten auf Anfragen im Kontext dieser Wissensbasis aufbereitet und ausgegeben werden. Beispielsweise werden für den Fahrzeugkontext relevante Informationen kontinuierlich erfasst und liegen abrufbereit im Fahrzeug vor. Diese Informationen können etwa Fahrzeugposition, Fahrtrichtung und Information zu Sehenswürdigkeiten oder Punkten von Interesse in einem definierten Radius rund um das Fahrzeug sein. Eine Anfrage kann im Kontext dieser aktuellen Fahrt und allen während dieser Fahrt bereits durchgeführten Aktionen des Infosystems analysiert und entsprechend beantwortet werden. Dies könnte technisch etwa in Form eines sogenannten Wissensgraphen über diese Fahrt gelöst werden, wobei dieser Wissensgraph kontinuierlich abgespeichert und für eine Bearbeitung von Anfragen zur Verfügung gestellt wird. Solch ein Wissensgraph kann dabei in einer für Wissensdatenbanken geeigneten Abfragesprache übersetzt werden. Auf diese Weise ist es möglich, ein besonders benutzerfreundliches Verfahren bereitzustellen, da eine noch gezieltere und gehaltvollere Beantwortung von Anfragen gewährleistet wird.

Ferner ist in einer weiteren bevorzugten Ausgestaltung der Erfindung vorgesehen, dass das Kontextinformationssystem, das Fahrzeugsensoriksystem, das Benutzersensoriksystem und die zumindest eine Speichereinheit und/oder jeweilige Komponenten dieser Systeme ausgelegt sind, mit dem Internet verbunden zu werden. Die zuvor genannten Vorteile sind somit noch besser zu erreichen, da zusätzlich zu den vorhandenen Ressourcen und Daten zusätzliche Quellen über das Internet für eine Beantwortung von Anfragen hinzugezogen werden können. Auch können zumindest Teile des Verfahrens über das Internet auf räumlich entfernten Speichereinheiten und Recheneinheiten durchgeführt werden, sodass ein Benutzer für die Anwendung des Infosystems selbst nur noch eine Endgerätinfrastruktur benötigt.

Außerdem ist in einer weiteren bevorzugten Ausgestaltung der Erfindung vorgesehen, dass die Komponente eines Fahrzeugsensoriksystems ausgewählt ist aus:
Frontradarinformationsvorrichtung, Heckradarinformationsvorrichtung, Ultraschallseitenerkennungsvorrichtung. Diese Vorrichtungen können im einzelnen zugehörige Technikkomponenten umfassen, welche es erlauben, sowohl eine jeweilige Abstandsinformation zu erheben als auch diese Information dann in entsprechender Aufbereitung im Sinne des Verfahrens bereitzustellen. Auch können diese Komponenten in Kombination verwendet werden, sodass eine Anfrage von einem Benutzer im Kontext dieser einzelnen oder kombinierten Informationen entsprechend bearbeitet werden kann. Die zuvor genannten Vorteile sind somit noch besser zu erreichen.

Schlussendlich ist in einer weiteren bevorzugten Ausgestaltung der Erfindung vorgesehen, dass die Komponente eines Benutzersensoriksystems ausgewählt ist aus :
Fahrzeuginnenraumkamerasystem, Infrarotsensorvorrichtung, Bewegungssensorvorrichtung, 3D-Kamerasystem. Auf diese Weise können Anfragen eines Benutzers im Fahrzeuginnenraum noch besser bearbeitet werden und mit den von diesen Vorrichtungen einzeln oder in Kombination erhobenen Zusatzinformationen noch besser bearbeitet werden, sodass noch gehaltvollere Antworten ermöglicht werden. Beispielsweise können auf diese Weise etwa emotionale Zustände eines Benutzers registriert und eingeordnet werden. Diese Analyse beziehungsweise Messung kann somit in den Kontext einer Fragestellung eingeordnet werden, um so eine folgerichtige und erweiterte Antwort bereitzustellen. So können bei Detektion von charakteristischen Launen des Benutzers seine zuvor gespeicherten Vorlieben und Präferenzen verwendet werden, um die Eingaben beziehungsweise Anfragen besser bearbeiten zu können. Das 3D-Kamerasystem kann beispielsweise aus mindestens zwei Kameravorrichtungen konzipiert sein, sodass eine besonders gute räumliche Erfassung des Innenraums und des Benutzers gewährleistet wird. Mittels der aufgezählten Komponenten alleine oder in Kombination kann beispielsweise somit eine Blickfeldrichtung noch besser erkannt werden. Auch eine Benutzeraktion, beispielsweise eine stark gestikulierende Hand, kann somit besser erkannt und sinngemäß interpretiert werden. Auch Benutzeremotionen können somit besser analysiert werden. Mittels der Infrarotsensorvorrichtung kann beispielsweise die Hautoberfläche analysiert werden, sodass hier eine weitere Information erhoben und sinngemäß verwendet werden kann. Die zuvor genannten Vorteile sind somit noch besser zu erreichen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein Prozessdiagramm eines Verfahrens zum Betreiben eines interaktiven Informationssystems für ein Fahrzeug;
- Figur 2: ein Fahrzeug, welches ausgelegt ist, ein Verfahren gemäß den Ansprüchen 1 bis 8 vor, nach oder während einer Fahrt zu betreiben.

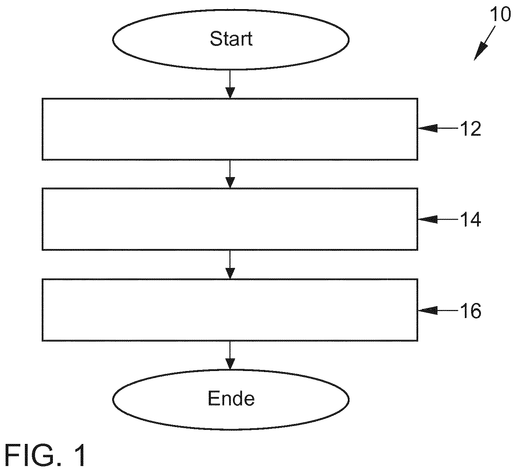

Figur 1 zeigt ein Prozessdiagramm 10 eines Verfahrens zum Betreiben eines interaktiven Informationssystems für ein Fahrzeug 18. In einem ersten Schritt 12 wird ein Kontextinformationssystem betrieben, welches ausgelegt ist, eine erste Anfrage eines Benutzers über eine Eingabeeinheit entgegenzunehmen und zu bearbeiten, sodass zumindest eine erste Antwort generiert wird und über eine Ausgabeeinheit zur Verfügung gestellt wird, wobei eine zweite Anfrage, welche unmittelbar direkt nach der ersten Anfrage gestellt wird, vor einer Bearbeitung mittels des Kontextinformationssystems im Kontext der ersten Anfrage aufbereitet wird, sodass zumindest eine zweite Antwort generiert wird und über eine Ausgabeeinheit zur Verfügung gestellt wird, wobei in Abhängigkeit der Aufbereitung die Antwort entweder im Kontext der ersten Antwort gegeben wird oder unabhängig von der ersten Antwort gegeben wird. In einem zweiten Schritt 14 wird zumindest eine Speichereinheit betrieben, welche mit dem Kontextinformationssystem koppelbar ist und ausgelegt ist, Aktivitäten des Kontextinformationssystems zu speichern und dem Kontextinformationssystem zwecks Bearbeitung von Anfragen zur Verfügung zu stellen. In einem dritten Schritt 16 wird zumindest eine Komponente eines Fahrzeugsensoriksystems betrieben, welche mit dem Kontextinformationssystem koppelbar ist und welche ausgelegt ist, zumindest eine Information aus der näheren und/oder erweiterten Umgebung des Fahrzeugs 18 und/oder von dem Fahrzeug 18 selbst zu erfassen und aufzubereiten, sodass diese zumindest eine Information dem Kontextinformationssystem zur Verfügung gestellt wird, sodass eine jeweilige Antwort auf eine Anfrage des Benutzers zusätzlich im Kontext dieser Information bearbeitet wird und über eine Ausgabeeinheit zur Verfügung gestellt wird. Die einzelnen Schritte des Prozessdiagramms 10 können sich dabei zum Teil überlappen und in nicht näher gezeigten Ausführungsvarianten zum Teil auch parallel zueinander vollzogen werden.

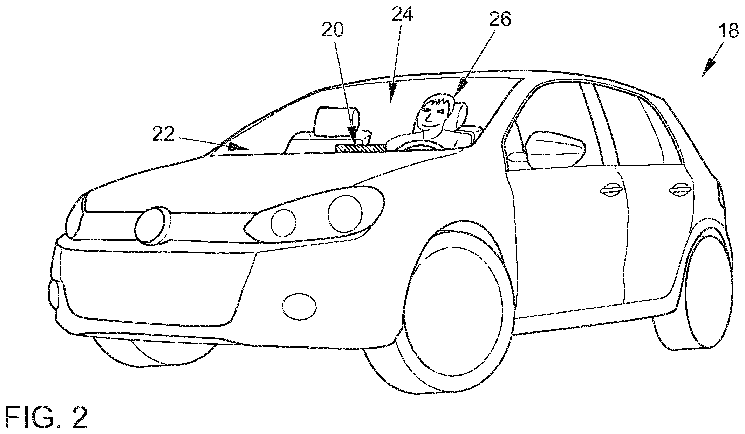

Figur 2 zeigt ein Fahrzeug 18, welches ausgelegt ist, ein Verfahren gemäß den Ansprüchen 1 bis 8 vor, nach oder während einer Fahrt zu betreiben. In dem Fahrzeug 18 ist für diese Zwecke ein interaktives Informationssystem 20 für ein Fahrzeug 18 in dem Ablagebereich 22 vorne an einer Windschutzscheibe 24 dargestellt. Dieses interaktive Informationssystem 20 kann dabei von einem Fahrer 26 dort abgelegt worden sein oder selbst Teil einer nicht im Detail dargestellten Innenraumausstattung des Fahrzeugs 18 sein.

### Bezugszeichenliste

- 10: Prozessdiagramm
- 12: erster Schritt
- 14: zweiter Schritt
- 16: dritter Schritt
- 18: Fahrzeug
- 20: interaktives Informationssystem
- 22: Ablage
- 24: Windschutzscheibe
- 26: Fahrer

## Patentansprüche

1. Verfahren zum Betreiben eines interaktiven Informationssystems (20) für ein Fahrzeug (18), umfassend die folgenden Schritte:
• Betreiben eines Kontextinformationssystems, welches ausgelegt ist, eine erste Anfrage eines Benutzers über eine Eingabeeinheit entgegenzunehmen und zu bearbeiten, sodass zumindest eine erste Antwort generiert wird und über eine Ausgabeeinheit zur Verfügung gestellt wird, wobei eine zweite Anfrage, welche direkt nach der ersten Anfrage gestellt wird, vor einer Bearbeitung mittels des Kontextinformationssystems im Kontext der ersten Anfrage unter Verwendung einer Kontextanalyse aufbereitet wird, sodass zumindest eine zweite Antwort generiert wird und über eine Ausgabeeinheit zur Verfügung gestellt wird, wobei in Abhängigkeit der Aufbereitung die zweite Antwort entweder im Kontext der ersten Antwort gegeben wird oder unabhängig von der ersten Antwort gegeben wird und sich die erste und/oder zweite Anfrage des Benutzers auf ein externes Objekt im Umkreis des Fahrzeugs (18) beziehen,
• Betreiben zumindest einer Speichereinheit, welche mit dem Kontextinformationssystem koppelbar ist und ausgelegt ist, Aktivitäten des Kontextinformationssystems zu speichern und dem Kontextinformationssystem zwecks Bearbeitung von Anfragen zur Verfügung zu stellen,
• Betreiben zumindest einer Komponente eines Fahrzeugsensoriksystems, welche mit dem Kontextinformationssystem koppelbar ist und welche ausgelegt ist, zumindest eine erste Information bezüglich des externen Objekts im Umkreis des Fahrzeugs (18) zu erfassen und aufzubereiten, sodass die zumindest eine erste Information dem Kontextinformationssystem zur Verfügung gestellt wird, sodass eine jeweilige Antwort auf die Anfragen des Benutzers zusätzlich im Kontext der ersten Information bearbeitet wird und über eine Ausgabeeinheit zur Verfügung gestellt wird, und
• Betreiben zumindest einer Komponente eines Benutzersensoriksystems, welche ausgelegt ist, zumindest eine zweite Information über eine mit dem externen Objekt im Umkreis des Fahrzeugs (18) assoziierbare Blickrichtung, Kopfposition und/oder Gestik des Benutzers zu erfassen und aufzubereiten, sodass die zumindest eine zweite Information dem Kontextinformationssystem zur Verfügung gestellt wird, sodass eine jeweilige Antwort auf die Anfragen des Benutzers zusätzlich im Kontext der zweiten Information bearbeitet wird und über eine Ausgabeeinheit zur Verfügung gestellt wird.

2. Verfahren nach Anspruch 1, wobei die Eingabeeinheit eine sprachgesteuerte Eingabeeinheit ist, welche ausgelegt ist, eine Spracheingabe aufzunehmen und zu verarbeiten, und/oder wobei die Eingabeeinheit ausgelegt ist, durch den Benutzer bereitgestellte digital aufbereitete Eingabeinformationen aufzunehmen und zu verarbeiten.

3. Verfahren nach einem der vorherigen Ansprüche, wobei die Ausgabeeinheit eine sprachgesteuerte Ausgabeeinheit ist, welche ausgelegt ist, eine Sprachausgabe auszugeben, und/oder wobei die Ausgabeeinheit ausgelegt ist, digital aufbereitete Ausgabeinformationen an ein externes Endgerät auszugeben.

4. Verfahren nach einem der vorherigen Ansprüche, wobei der Benutzer ein Fahrer (26) und/oder Beifahrer von dem Fahrzeug (18) ist, wobei eine Stimme des Benutzers von dem Kontextinformationssystem wiedererkannt wird und eine in der Speichereinheit gespeicherte persönliche Wissensbasis bei Antworten für diesen Benutzer berücksichtigt wird.

5. Verfahren nach einem der vorherigen Ansprüche, wobei Aktivitäten des Kontextinformationssystems pro Fahrt des Fahrzeugs (18) als eine in sich geschlossene Wissensbasis gespeichert werden, sodass zu gebende Antworten auf Anfragen im Kontext dieser Wissensbasis aufbereitet und ausgegeben werden.

6. Verfahren nach einem der vorherigen Ansprüche, wobei das Kontextinformationssystem, das Fahrzeugsensoriksystem, das Benutzersensoriksystem und die zumindest eine Speichereinheit und/oder jeweilige Komponenten dieser Systeme ausgelegt sind, mit dem Internet verbunden zu werden.

7. Verfahren nach einem der vorherigen Ansprüche, wobei die Komponente eines Fahrzeugsensoriksystems ausgewählt ist aus: Frontradarinformationsvorrichtung, Heckradarinformationsvorrichtung, Ultraschallseitenerkennungsvorrichtung.

8. Verfahren nach einem der vorherigen Ansprüche, wobei die Komponente eines Benutzersensoriksystems ausgewählt ist aus: Fahrzeuginnenraumkamerasystem, Infrarotsensorvorrichtung, Bewegungssensorvorrichtung, 3D-Kamerasystem.

9. Fahrzeug (18), welches ausgelegt ist, ein Verfahren gemäß einem der Ansprüche 1 bis 8 vor, nach oder während einer Fahrt zu betreiben.

## Claims

1. A method for operating an interactive information system (20) for a vehicle (18), comprising the following steps:
• Operating a context information system that is designed to receive and process a first inquiry from a user via an input unit, so that at least a first response is generated and made available via an output unit, wherein a second inquiry, which is made immediately after the first inquiry, is prepared in the context of the first inquiry by means of a context analysis before being processed by means of the context information system, so that at least a second response is generated and made available via an output unit, wherein, as a function of the preparation, the second response is given either in the context of the first response or is given independently of the first response, and the first and/or second inquiry of the user relate to an external object in the vicinity of the vehicle (18),
• Operating at least one storage unit that can be coupled to the context information system and is designed to store activities of the context information system and to make them available to the context information system for the purpose of processing inquiries,
• Operating at least one component of a vehicle sensor system that can be coupled to the context information system and that is designed to capture and process at least one first item of information with respect to the external object in the vicinity of the vehicle (18), so that the at least one first item of information is made available to the context information system, so that a particular response to the user's inquiries is additionally processed in the context of the first item of information and is made available via an output unit, and
• Operating at least one component of a user sensor system that is designed to capture and process at least one second item of information about a viewing direction, head position and/or gesture of the user that can be associated with the external object in the vicinity of the vehicle (18), so that the at least one second item of information is made available to the context information system, so that a particular response to the user's inquiries is additionally processed in the context of the second item of information and is made available via an output unit.

2. The method according to claim 1, wherein the input unit is a voice-controlled input unit that is designed to receive and process a voice input, and/or wherein the input unit is designed to receive and process digitally processed input information provided by the user.

3. The method according to one of the preceding claims, wherein the output unit is a voice-controlled output unit that is designed to output a voice output, and/or wherein the output unit is designed to output digitally processed output information to an external terminal.

4. The method according to one of the preceding claims, wherein the user is a driver (26) and/or passenger of the vehicle (18), wherein a voice of the user is further recognized by the context information system and a personal knowledge base stored in the storage unit is taken into account in responses for this user.

5. The method according to one of the preceding claims, wherein for each trip of the vehicle (18) activities of the context information system are stored as a self-contained knowledge base, so that responses to be given to inquiries are prepared and output in the context of this knowledge base.

6. The method according to one of the preceding claims, wherein the context information system, the vehicle sensor system, the user sensor system and the at least one storage unit and/or respective components of these systems are designed to be connected to the internet.

7. The method according to one of the preceding claims, wherein the component of a vehicle sensor system is selected from: front radar information device, rear radar information device, ultrasonic side detection device.

8. The method according to one of the preceding claims, wherein the component of a user sensor system is selected from: vehicle interior camera system, infrared sensor device, motion sensor device, 3D camera system.

9. A vehicle (18) that is designed to operate a method according to one of claims 1 to 8 before, after or during a trip.

## Revendications

1. Procédé d'exploitation d'un système d'information interactif (20) pour un véhicule (18), comprenant les étapes suivantes :
• exploitation d'un système d'information contextuelle, qui est conçu pour accepter et traiter une première demande d'un utilisateur par l'intermédiaire d'une unité d'entrée, de sorte qu'au moins une première réponse est générée et mise à disposition par l'intermédiaire d'une unité de sortie, dans lequel une seconde demande, qui est posée directement après la première demande, est préparée avant un traitement par le biais du système d'information contextuelle dans le contexte de la première demande à l'aide d'une analyse contextuelle, de sorte qu'au moins une seconde réponse est générée et mise à disposition par l'intermédiaire d'une unité de sortie, dans lequel la seconde réponse est, en fonction du traitement, soit donnée dans le contexte de la première réponse, soit donnée indépendamment de la première réponse, et la première et/ou la seconde demande de l'utilisateur se rapportent à un objet externe dans le périmètre du véhicule (18),
• exploitation d'au moins une unité de mémoire, qui peut être couplée au système d'information contextuelle et qui est conçue pour mémoriser des activités du système d'information contextuelle et les mettre à disposition du système d'information contextuelle en vue du traitement de demandes,
• exploitation d'au moins un composant d'un système de capteurs de véhicule, qui peut être couplé au système d'information de contexte et qui est conçu pour détecter et préparer au moins une première information concernant l'objet externe dans le périmètre du véhicule (18), de sorte que l'au moins une première information est mise à disposition du système d'information contextuelle, de sorte qu'une réponse respective aux demandes de l'utilisateur est traitée en plus dans le contexte de la première information et est mise à disposition par l'intermédiaire d'une unité de sortie, et
• exploitation d'au moins un composant d'un système de capteurs d'utilisateur, qui est conçu pour détecter et préparer au moins une seconde information sur une direction du regard, une position de tête et/ou une gestuelle de l'utilisateur pouvant être associée à l'objet externe dans le périmètre du véhicule (18), de sorte que l'au moins une seconde information est mise à disposition du système d'information contextuelle, de sorte qu'une réponse respective aux demandes de l'utilisateur est traitée en plus dans le contexte de la seconde information et est mise à disposition par l'intermédiaire d'une unité de sortie.

2. Procédé selon la revendication 1, dans lequel l'unité d'entrée est une unité d'entrée à commande vocale, qui est conçue pour recevoir et traiter une entrée vocale, et/ou dans lequel l'unité d'entrée est conçue pour recevoir et traiter des informations d'entrée préparées numériquement et mises à disposition par l'utilisateur.

3. Procédé selon l'une des revendications précédentes, dans lequel l'unité de sortie est une unité de sortie à commande vocale, qui est conçue pour émettre une sortie vocale, et/ou dans lequel l'unité de sortie est conçue pour émettre des informations de sortie préparées numériquement vers un terminal externe.

4. Procédé selon l'une des revendications précédentes, dans lequel l'utilisateur est un conducteur (26) et/ou un passager du véhicule (18), dans lequel une voix de l'utilisateur est reconnue par le système d'information contextuelle et une base de connaissances personnelles mémorisée dans l'unité de mémoire est prise en compte dans les réponses pour cet utilisateur.

5. Procédé selon l'une des revendications précédentes, dans lequel des activités du système d'information contextuelle sont enregistrées par trajet du véhicule (18) sous la forme d'une base de connaissances fermée sur elle-même, de sorte que des réponses à donner à des demandes sont préparées et émises dans le contexte de cette base de connaissances.

6. Procédé selon l'une des revendications précédentes, dans lequel le système d'information contextuelle, le système de capteurs de véhicule, le système de capteurs d'utilisateur et l'au moins une unité de mémoire et/ou des composants respectifs de ces systèmes sont conçus pour être connectés à Internet.

7. Procédé selon l'une des revendications précédentes, dans lequel les composants d'un système de capteurs de véhicule sont choisis parmi les éléments suivants : dispositif d'information de radar avant, dispositif d'information de radar arrière, dispositif de reconnaissance latérale par ultrasons.

8. Procédé selon l'une des revendications précédentes, dans lequel les composants d'un système de capteurs d'utilisateur sont choisis parmi les éléments suivants : système de caméra d'habitacle de véhicule, dispositif de capteur infrarouge, dispositif de capteur de mouvement, système de caméra 3D.

9. Véhicule (18) qui est conçu pour exploiter un procédé selon l'une des revendications 1 à 8 avant, après ou pendant un trajet.
